# FASCICULE DE BREVET EUROPEEN

(11) **EP 2 629 959 B1**
(45) Date de publication et mention de la délivrance du brevet: **01.10.2014**
(21) Numéro de dépôt: 11779827.2
(22) Date de dépôt: 10.10.2011
(51) Int. Cl.: B29C 55/16, B29C 55/08, B29C 55/14

(54) **DISPOSITIF POUR ÉTIRER UN FILM EN MATIÈRE SYNTHÉTIQUE DANS LE SENS TRANSVERSAL ET DANS LE SENS LONGITUDINAL**
VORRICHTUNG ZUM DEHNEN EINER FOLIE AUS SYNTHETISCHEM MATERIAL IN QUER- UND LÄNGSRICHTUNG
DEVICE FOR STRETCHING A FILM CONSISTING OF A SYNTHETIC MATERIAL IN THE TRANSVERSE DIRECTION AND IN THE LONGITUDINAL DIRECTION

(30) Priorité: 21.10.2010 FR 1058590
(43) Date de publication de la demande: 28.08.2013
(73) Titulaire: Marchante Moreno, Innocente, 73370 Le Bourget du Lac (FR)
(72) Inventeur: Marchante Moreno, Innocente, 73370 Le Bourget du Lac (FR)
(74) Mandataire: Verriest, Philippe
(86) Numéro de dépôt international: PCT/FR2011/052357
(87) Numéro de publication internationale: WO 2012/052655

(56) Documents cités:
- EP-A2- 0 291 775
- GB-A- 1 442 113

## Description

L'invention concerne un dispositif pour étirer un film en matière synthétique dans le sens transversal et dans le sens longitudinal.

Un tel dispositif est connu du document EP 0 291 775 A2.

Lors de la fabrication d'un film en matière synthétique, le film, après sa formation, passe, successivement par une étape d'étirage dans le sens longitudinal et une étape d'étirage dans le sens transversal.

Des films de matière thermoplastiques bi-orientés sont obtenus à partir d'une feuille extrudée, après que la matière à l'état fondu ait été déposée sur un cylindre de refroidissement de façon à ralentir la cristallisation du film thermoplastique et permettre son étirage ultérieur.

La feuille de matière thermoplastique passe ensuite dans un système d'étirage longitudinal qui est constitué d'une série de cylindres qui tournent de plus en plus vite de façon à allonger la feuille thermoplastique dans le sens longitudinal. La feuille passe ensuite dans le système d'étirage transversal constitué de deux rails continus sur lesquels se déplacent des pinces qui maintiennent la feuille, chaque rail étant associé à une chaîne agencée pour entraîner les pinces correspondantes le long dudit rail. Les rails s'écartent à mesure qu'ils avancent dans un four chauffé à haute température, ce qui produit un étirage transversal.

Ce type d'étirage, dit séquentiel, convient parfaitement à de nombreuses matières thermoplastiques, et est largement utilisé dans l'industrie.

Avec le développement des matériaux thermoplastiques, l'augmentation des vitesses des machines de conversion et des nouvelles applications des thermoplastiques, il devient nécessaire de changer les propriétés du film de manière à augmenter la résistance mécanique de ce dernier dans le sens longitudinal. De telles propriétés du film peuvent permettre aussi d'augmenter la vitesse de la ligne de production du film, sans augmenter la vitesse des roues dentées qui entraînent chaque chaîne. De même, des modifications des propriétés du film dans le sens longitudinal peuvent aussi permettre de produire des films avec un haut retrait longitudinal.

Avec des machines à étirage séquentiel comme elles existent actuellement, il est impossible d'obtenir des films présentant des résistances mécaniques importantes dans le sens longitudinal ou de modifier ces dernières.

En effet, l'étirage transversal étant fait en dernier, on peut très bien agir sur les propriétés mécaniques du film dans le sens transversal, mais on ne peut plus agir dans le sens longitudinal alors que toute les machines de conversion, enroulage et déroulage ont besoin de films présentant des résistances mécaniques importantes dans le sens longitudinal, tels que les films adhésifs.

La présente invention vise à remédier à cet inconvénient.

Un but de l'invention est donc de fournir un dispositif, pour étirer un film en matière synthétique dans le sens transversal, de conception simple qui permette de réaliser, après l'étirage dans le sens transversal du film, un étirage du film dans le sens longitudinal pour modifier les propriétés du film dans le sens longitudinal.

A cet effet, l'invention concerne un dispositif pour étirer un film en matière synthétique dans le sens transversal et dans le sens longitudinal, comprenant :
- un four,
- une première et une seconde séries de pinces disposées de part et d'autre du film et agencées pour saisir le film au niveau de ses bords longitudinaux,
- deux rails agencés pour guider les pinces des deux séries dans le four, le premier et le second rails s'étendant selon une orientation générale parallèle à la direction longitudinale du film, le premier et le second rails divergeant dans une première zone du dispositif,
- deux chaînes sans fin agencées pour entraîner les pinces le long des deux rails chaque chaîne étant constituée de maillons articulés les uns sur les autres au moyen d'articulations, une articulation sur deux servant au montage d'une pince,
chaque rail comportant une portion de guidage qui s'étend, dans la première zone du dispositif, sensiblement parallèlement à la direction du rail et qui présente dans une deuxième zone du dispositif un décrochement en direction de la chaîne, chaque chaîne comportant alternativement des maillons d'un premier type et des maillons d'un deuxième type, chaque maillon du premier type présentant des moyens de retenue faisant saillie en direction du rail correspondant, les moyens de retenue étant agencés pour être retenus par la portion de guidage de manière à appliquer une force de retenue sur le maillon correspondant dans la première zone, le décrochement de la portion de guidage étant agencé dans la deuxième zone de manière à diminuer la force de retenue sur le maillon correspondant afin de déformer la chaîne pour augmenter le pas de celle-ci.

Les moyens de retenue en coopération avec la portion de guidage du rail permettent, par la force de retenue appliquée sur le maillon de maintenir constant le pas de chaîne dans la première zone. Le décrochement de la portion de guidage dans la deuxième zone permet, en diminuant la force de retenue sur le maillon, une déformation de la chaîne qui augmente le pas de chaîne et donc l'espacement le long du rail entre les pinces distribuées à ce niveau de la chaîne. Cet espacement entre pinces permet une augmentation des contraintes longitudinales appliquées au film et donc son étirage dans le sens longitudinal.

Avantageusement, chaque maillon du premier type présente une forme générale en L, une première partie du maillon formant la première branche du L et une deuxième partie du maillon formant la deuxième branche du L, l'articulation pourvue d'une pince, étant située au niveau de l'extrémité libre de la première partie et les moyens de retenue étant disposés au niveau de l'extrémité libre de la deuxième partie.

Une telle forme des maillons du premier type permet une application optimisée de la force de retenue sur le maillon correspondant, cette force de retenue étant appliquée par la coopération des moyens de retenue avec la portion de guidage sur le maillon correspondant.

De manière avantageuse, l'articulation dépourvue de pince de chaque maillon du premier type est disposée sur la deuxième partie du maillon à proximité de l'intersection entre la première et la seconde parties.

Une telle disposition de l'articulation dépourvue de pince sur les maillons du premier type permet à la chaîne de présenter un alignement des maillons dans la première zone.

Selon une possibilité de l'invention, les moyens de retenue de chaque maillon du premier type comprennent au moins un galet agencé pour rouler le long de la portion de guidage correspondante.

Un tel galet permet de limiter les frottements sur la portion de guidage, limitant ainsi l'usure que pourrait créer de tels frottements.

Selon une autre possibilité de l'invention, les moyens de retenue de chaque maillon du premier type comprennent au moins un patin agencé pour glisser le long de la portion de guidage correspondante.

Un tel patin permet de limiter les frottements sur la portion de guidage, limitant ainsi l'usure que pourrait créer de tels frottements.

De manière avantageuse, l'articulation dépourvue de pince de chaque maillon du premier type comprend des moyens d'appui pour appuyer sur la portion de guidage.

De tels moyens d'appui permettent, en venant en appui sur la portion de guidage, d'accompagner le maillon correspondant pendant la déformation de la chaîne.

Préférentiellement, les moyens d'appui comprennent au moins un galet.

Un tel galet permet de limiter les frottements sur la portion de guidage, limitant ainsi l'usure que pourrait créer de tels frottements.

Avantageusement, chaque portion de guidage s'étend jusqu'à l'extrémité aval du rail correspondant.

Une telle continuité de chaque portion de guidage jusqu'à l'extrémité aval du rail correspondant permet une application des contraintes d'étirage longitudinal sans leur relâchement, permettant ainsi une stabilisation des caractéristiques du film liées à cet étirage.

Selon une possibilité de l'invention, la deuxième zone est dans le four.

Ainsi, le film est chauffé pendant l'étape d'étirage dans le sens longitudinal, permettant d'augmenter la résistance du film à l'élongation et offrant ainsi la possibilité de manipuler le film à haute vitesse en autorisant des cadences de production plus importantes.

Selon une autre possibilité de l'invention, la deuxième zone est en dehors du four et la deuxième zone est une zone de refroidissement du film.

Ainsi, le film est refroidi pendant l'étape d'étirage dans le sens longitudinal, permettant de modifier ses propriétés de relaxation longitudinale en présence d'une source.

Avantageusement, chaque pince comporte plusieurs galets pour permettre un guidage en translation de ladite pince sur le rail correspondant.

De tels galets permettent un guidage de la pince en limitant les frottements sur le rail correspondant tout en assurant un bon maintien de la pince sur ce même rail.

De toute façon l'invention sera bien comprise à l'aide de la description qui suit en référence au dessin schématique annexé représentant, à titre d'exemple non limitatif, une forme d'exécution de ce dispositif pour étirer un film en matière synthétique dans le sens transversal et dans le sens longitudinal.
La figure 1 est une vue d'ensemble d'une installation de production de film en matière synthétique ;
la figure 2 est une vue en coupe transversale de l'un des deux ensembles d'entrainement du film composé de pinces, d'un rail et d'une chaîne ;
la figure 3 est une vue en coupe longitudinale illustrant l'interaction entre une chaîne et le rail correspondant.

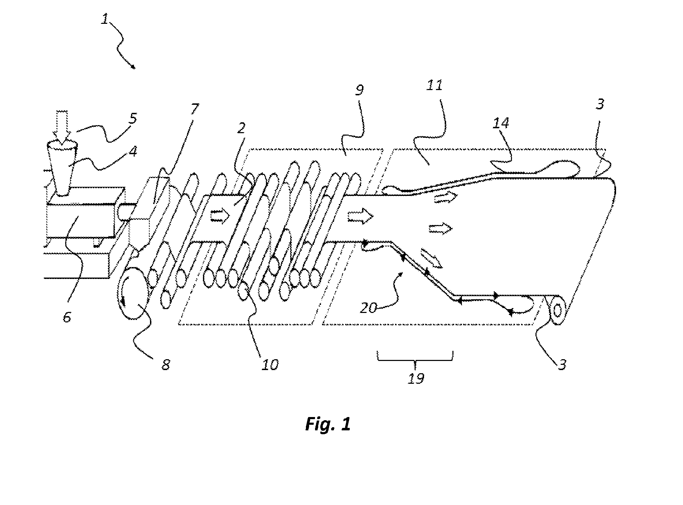

La figure 1 illustre une installation 1 de production d'un film 2 en matière synthétique. Le film 2 se présente sous une forme générale de ruban avec deux bords longitudinaux 3 sensiblement parallèles.

Une telle installation 1 comporte successivement les éléments suivants :
- un système d'alimentation 4 en matière synthétique 5,
- une extrudeuse 6 permettant une alimentation contrôlée en matière synthétique 5,
- un système de fusion 7 de la matière synthétique 5,
- un tambour de coulée 8 sur lequel est formé le film 2 par écoulement de la matière synthétique 5 fondue,
- un système 9 pour étirer le film 2 dans le sens longitudinal, le système 9 comportant des rouleaux 10 à différentiel de vitesse pour emporter et étirer le film 2,
- un dispositif 11 pour étirer le film 2 dans le sens transversal et dans le sens longitudinal.

Lors de la réalisation d'un film 2 avec une telle installation, le film 2 est déplacé longitudinalement dans l'installation 1 en passant successivement dans les différents éléments de l'installation.

Le dispositif 11 comporte :
- un four (non représenté) permettant de réguler la température du film 2 pendant son étirage dans le sens transversal et le sens longitudinal,
- une première et une seconde séries de pinces 12, les pinces de la première série étant agencées pour saisir le film 2 sur le premier bord longitudinal 3, et les pinces 12 de la seconde série étant agencées pour saisir le film 2 sur le second bord longitudinal 3,

- un premier rail 13 agencé pour guider en translation la première série de pinces 12 dans le four,
- un second rail 13 agencé pour guider en translation la seconde série de pinces 12 dans le four,
- une première chaîne sans fin 14 agencée pour entraîner les pinces 12 de la première série,
- une seconde chaîne sans fin 14 agencée pour entraîner les pinces 12 de la seconde série.

Chaque chaîne 14 comporte des maillons 15, 16 articulés les uns sur les autres au moyens d'articulations 17, 18.

Les rails 13 sont disposés au moins partiellement dans le four selon une orientation générale longitudinale de part et d'autre du film 2. Les rails 13, comme illustré sur la figure 1, divergent dans une première zone 19 du dispositif 11 selon la direction transversale au film 2.

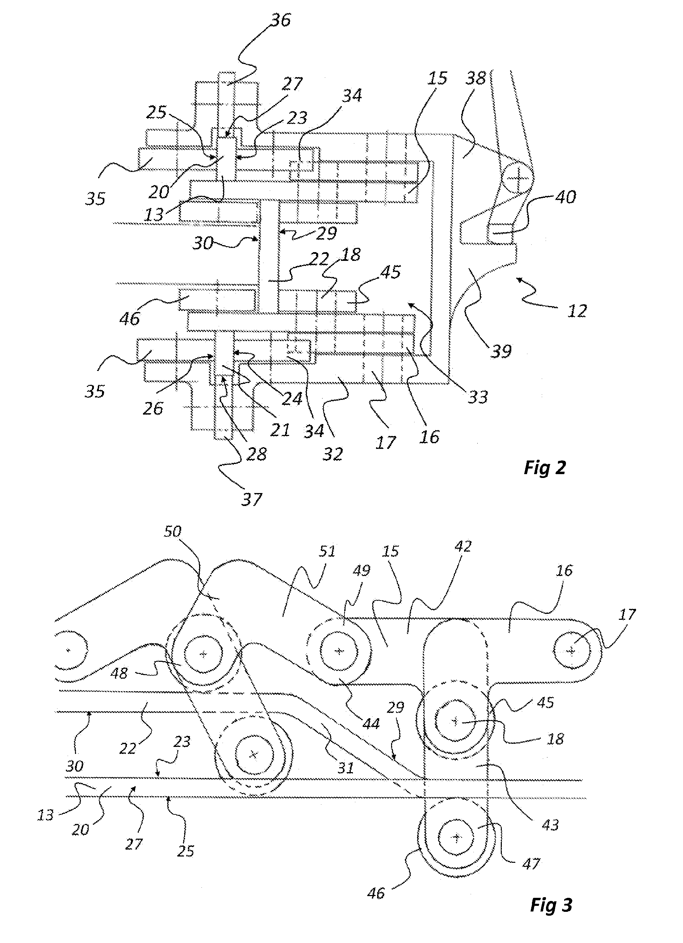

Chaque rail 13 comporte, comme illustré sur la figure 2, un bord supérieur 20 et un bord inférieur 21 pour guider les pinces 12 et une portion de guidage centrale 22 pour guider la chaîne 14.

Les bords supérieur 20 et inférieur 21 présentent chacun une section sensiblement rectangulaire. Les bords supérieur 20 et inférieur 21 présentent chacun, une première face 23, 24 en regard du bord longitudinal 3 du film 2, une deuxième face 25, 26 opposée à la première et un coté extérieur 27, 28 qui est opposé à la portion centrale 22.

La portion centrale 22 présente, comme illustré sur la figure 2, une section rectangulaire, présentant une face d'appui 29 en regard du bord longitudinal 3 du film 2 et une face de retenue 30 opposée à la face d'appui 29.

Dans la première zone 19 du dispositif 11, la portion de guidage 22 s'étend dans le même plan que les bords supérieur 20 et inférieur 21 du rail 13. Dans une seconde zone du dispositif 11, la portion de guidage 22 présente, comme illustré sur la figure 3, un décrochement 31 en direction du film 2. En aval du décrochement 31, la portion de guidage 22 s'étend parallèlement et à distance des bords inférieur 20 et supérieur 21 du rail 13 jusqu'à l'extrémité aval du rail 13.

Chaque pince 12 présente, comme illustré sur la figure 2, un corps de pince 32 creux de forme sensiblement parallélépipédique avec une cavité 33 en direction du rail 13 correspondant. La cavité 33 loge des galets 34, 35, 36, 37 montés en rotation sur le corps de pince 32. Les galets 34, 35, 36, 37 sont agencés sur chaque pince 12 de manière à permettre un maintien de la pince 12 sur le rail 13 correspondant.

Une première série de quatre galets 34 sont positionnés en appui sur la première face 23, 24 des bords 20, 21 du rail 13, deux galets 34 en appui sur le bord supérieur 20 et deux galets 34 en appui sur le bord inférieur 21. Une seconde série de quatre galets 35 sont positionnés en appui sur la seconde face 25, 26 des bords du rail 13, deux galets 35 en appui sur le bord supérieur 20 et deux galets 35 en appui sur le bord inférieur 21. Cet agencement de la première et de la seconde séries de galets 34, 35 est réalisé de manière à enserrer les bords 20, 21 du rail 13. Deux galets 36, 37 supérieur et inférieur permettent de compléter le maintien de la pince 12 sur le rail 13, en venant en appui sur les cotés extérieurs 27, 28 des bords 20, 21 du rail 13.

Chaque pince 12 présente également, en direction du film 2, deux ensembles de préhension 38 du film comportant chacun une embase 39 et un doigt d'appui 40 sur le film 2.

Chaque pince 12 est montée sur la chaîne 14 correspondante au niveau d'une articulation 17 de la chaîne 14. Les pinces 12 sont montées sur une articulation sur deux de la chaîne 14 correspondante, le montage étant articulé autour de cette même articulation.

Chaque chaîne comporte alternativement des maillons 15 d'un premier type et des maillons 16 d'un deuxième type. Chaque maillon 15, 16 présente pour sa liaison avec un maillon voisin, une articulation 17, pourvue d'une pince, et une articulation 18 dépourvue de pince.

Chaque maillon 15 du premier type présente une forme générale en L, une première partie 42 du maillon 15 formant la première branche du L et une deuxième 43 partie formant la deuxième branche du L. L'articulation 17, pourvue d'une pince, est située au niveau de l'extrémité libre 44 de la première partie 42. L'articulation 18 dépourvue de pince est disposée au niveau de la deuxième partie 43 du maillon 15 à proximité de l'intersection entre la première et la deuxième parties 42, 43. L'articulation 18 porte deux galets d'appui 45 agencés pour venir en appui sur la face d'appui 29 de la portion de guidage 22 du rail 13 correspondant à la chaîne 14.

La première partie 42 est, lorsque le maillon 15 du premier type est dans la première zone 19 du dispositif 11, sensiblement parallèle au rail 13, la deuxième partie 43 s'étendant perpendiculairement au rail 13.

Deux galets de retenue 46 sont montés en rotation au niveau de l'extrémité libre 47 de la deuxième partie 43 du maillon 15. Les deux galets de retenue 46 sont en appui sur la face de retenue 30 de la portion de guidage 22 du rail 13.

Chaque maillon 16 du deuxième type présente une forme générale de L, les articulations 17, 18 étant disposées aux extrémités libres 48, 49 de la première et la deuxième parties 50, 51 formant respectivement la première et la deuxième branches du L.

Lors de l'entrée du film 2 dans le dispositif 11, le film 2 est saisi par les pinces 12 au niveau de ses bords longitudinaux 3. Les pinces 12, entrainées par les chaînes 14, entraînent le film 2 le long des rails 13 dans le four. Dans la première zone 19 du dispositif, les galets de retenue 46 sont en appui sur la face de retenue 30 de la portion de guidage 22 du rail 13. Cet appui permet d'appliquer une force de retenue sur l'articulation 18 sans pince des maillons 15 correspondants permettant de maintenir l'articulation 18 à proximité du rail 13. Cette force de retenue permet, comme illustré sur la figure 3, un alignement des maillons 15, 16 du premier type et du second type, matérialisé par l'alignement de leurs parties 42, 51 respectives. Cet alignement conservé dans la première zone 19 du dispositif 11 permet de maintenir un pas de chaîne 14 constant et donc un espacement entre pinces 12 constant le long du rail 13. Le film 2 est donc déplacé, dans la première zone sans application de contrainte longitudinale.

Ainsi, lors de son déplacement dans la première zone, le film 2 ayant atteint la température adéquate, la divergence des rails 13 permet d'étirer le film 2 dans le sens transversal par une augmentation continue de l'espacement dans le sens transversal entre les pinces 12 de la première série et les pinces 12 de la seconde série.

Après le passage du film 2 dans la première zone 19 du dispositif 11, le film 2, entraîné par les pinces 12, arrive dans une deuxième zone du dispositif 11 au niveau du décrochement 31 de la portion de guidage 22 de chaque rail 13. Les galets de retenue 46 roulent le long de la face de retenue 30 de la portion de guidage 22, en suivant le décrochement 31. Il en résulte un relâchement de la force de retenue appliquée à l'articulation 18 dépourvue de pince des maillons 15 correspondants. L'articulation 18 sans pince, accompagnée par l'appui des galets d'appui 45 sur la portion de guidage 22, est déplacée à distance des bords 20, 21 du rail 13. Ce déplacement de l'articulation 18 dépourvue de pince déforme la chaîne 14 en permettant, comme illustré sur la figure 3, un alignement des articulations 17,18. Il résulte de cet alignement une augmentation du pas de chaîne et donc de l'espacement entre les pinces 12 le long du rail 1 correspondant.

Cet espacement entre les pinces 12 permet d'appliquer une contrainte longitudinale sur le film 2 et donc de l'étirer dans le sens longitudinal.

Selon une possibilité de l'invention, non illustrée, les galets d'appui 45 et les galets de retenue 46 peuvent être remplacés par respectivement un patin d'appui et un patin de retenue.

Selon une autre possibilité de l'invention, non illustrée, les pinces 12 peuvent être montées en coulissement sur les rails 13 correspondant par l'utilisation de deux coulisseaux en remplacement des galets 34, 35, 36, 37, chaque coulisseau venant enserrer un bord 20, 21 du rail 13.

Selon une autre possibilité de l'invention, la deuxième zone du dispositif 11 peut être en dehors du four, dans une zone de refroidissement du film 2. Cette zone de refroidissement permet d'effectuer l'étirage du film 2 à une température proche de la température ambiante pour permettre une modification des propriétés de relaxation longitudinale du film 2 en présence d'une source de chaleur.

Comme il va de soi, l'invention ne se limite pas à la seule forme d'exécution de ce dispositif pour étirer un film en matière synthétique dans le sens transversal et dans le sens longitudinal, décrite ci-dessus à titre d'exemple, elle en embrasse au contraire toutes les variantes de réalisation, sans sortir du cadre des revendications annexées.

## Revendications

1. Dispositif (11) pour étirer un film (2) en matière synthétique dans le sens transversal et dans le sens longitudinal, comprenant :
- un four,
- une première et une seconde séries de pinces (12) disposées de part et d'autre du film et agencées pour saisir le film (2) au niveau de ses deux bords longitudinaux (3),
- deux rails (13) agencés pour guider les pinces (12) des deux séries dans le four, le premier et le second rails (13) s'étendant selon une orientation générale parallèle à la direction longitudinale du film (2), le premier et le second rails (13) divergeant dans une première zone (19) du dispositif (11),
- deux chaînes sans fin (14) agencées pour entraîner les pinces (12) des deux séries le long des deux rails (13), chaque chaîne (14) étant constituée de maillons articulés (15, 16) les uns sur les autres au moyen d'articulations (17, 18), une articulation (17) sur deux servant au montage d'une pince (12),
chaque rail (13) **comportant** une portion de guidage (22) qui s'étend, dans la première zone (19) du dispositif, sensiblement parallèlement à la direction du rail (13) et qui présente dans une deuxième zone du dispositif (11) un décrochement en direction de la chaîne, chaque chaîne (14) **comportant** alternativement des maillons (15) d'un premier type et des maillons (16) d'un deuxième type, chaque maillon (15) du premier type présentant des moyens de retenue faisant saillie en direction du rail (13) correspondant, les moyens de retenue (46) étant agencés pour être retenus par la portion de guidage (22) de manière à appliquer une force de retenue sur le maillon (15) correspondant dans la première zone (19), le décrochement (31) de la portion de guidage (22) étant agencé dans la deuxième zone de manière à diminuer la force de retenue sur le maillon (15) correspondant afin de déformer la chaîne (14) pour augmenter le pas de celle-ci.

2. Dispositif (11) selon la revendication 1, **caractérisé en ce que** chaque maillon (15) du premier type présente une forme générale en L, une première partie (42) du maillon (15) formant la première branche du L et une deuxième partie (43) du maillon (15) formant la deuxième branche du L, l'articulation (17) pourvue d'une pince (12) étant située au niveau de l'extrémité libre (44) de la première partie (42) et les moyens de retenue étant disposés au niveau de l'extrémité libre (47) de la deuxième partie (43).

3. Dispositif selon la revendication 2, **caractérisé en ce que** l'articulation (18) dépourvue de pince de chaque maillon (15) du premier type est disposée au niveau de la deuxième partie (43) dudit maillon (15), à proximité de l'intersection entre la première et la deuxième parties (42, 43).

4. Dispositif (11) selon l'une des revendications 1 à 3, **caractérisé en ce que** les moyens de retenue de chaque maillon (15) du premier type comprennent au moins un galet (46) agencé pour rouler le long de la portion de guidage (22) correspondante.

5. Dispositif (11) selon l'une des revendications 1 à 3, **caractérisé en ce que** les moyens de retenue de chaque maillon (15) du premier type comprennent au moins un patin agencé pour glisser le long de la portion de guidage (22) correspondante.

6. Dispositif (11) selon l'une des revendications 1 à 5, **caractérisé en ce que** l'articulation (18) dépourvue de pince de chaque maillon (15) du premier type comprend des moyens d'appui pour appuyer sur la portion de guidage (22).

7. Dispositif (11) selon la revendication 6, **caractérisé en ce que** les moyens d'appui comprennent au moins un galet (45).

8. Dispositif (11) selon l'une des revendications 1 à 7, **caractérisé en ce que** chaque portion de guidage (22) s'étend jusqu'à l'extrémité aval du rail (13) correspondant.

9. Dispositif (11) selon l'une des revendications 1 à 8, **caractérisé en ce que** la deuxième zone est dans le four.

10. Dispositif (11) selon l'une des revendications 1 à 8, **caractérisé en ce que** la deuxième zone est en dehors du four et **en ce que** la deuxième zone est une zone de refroidissement du film.

11. Dispositif (11) selon l'une des revendications 1 à 10, **caractérisé en ce que** chaque pince (12) comporte plusieurs galets (34, 35, 36, 37) agencés pour permettre un guidage en translation de ladite pince (12) sur le rail (13) correspondant.

## Patentansprüche

1. Vorrichtung (11) zum Ziehen einer Folie (2) aus synthetischem Material in Querrichtung und in Längsrichtung, umfassend:
- einen Ofen,
- eine erste und eine zweite Reihe an Greifern (12), die beiderseits der Folie angebracht und angeordnet sind, um die Folie (2) im Bereich ihrer beiden Längsränder (3) zu erfassen,
- zwei Schienen (13), die angeordnet sind, um die Greifer (12) der beiden Reihen in den Ofen zu führen, wobei sich die erste und die zweite Schiene (13) in eine allgemeine Richtung erstrecken, die parallel zur Längsrichtung der Folie (2) verläuft, wobei die erste und die zweite Schiene (13) in einer ersten Zone (19) der Vorrichtung (11) auseinanderlaufen,
- zwei Endlosketten (14), die angeordnet sind, um die Greifer (12) der beiden Reihen entlang der beiden Schienen (13) anzutreiben, wobei sich jede Kette (14) aus Kettengliedern (15, 16) zusammensetzt, die über Artikulationen (17, 18) ineinander gefügt sind, wobei jede zweite Artikulation (17) zur Montage eines Greifers (12) dient,
wobei jede Schiene (13) einen Führungsabschnitt (22) umfasst, der sich in der ersten Zone (19) der Vorrichtung in etwa parallel zur Schienenrichtung (13) erstreckt, und der in einer zweiten Zone der Vorrichtung (11) eine Abweichung in Richtung der Kette aufweist, wobei jede Kette (14) abwechselnd Kettenglieder (15) eines ersten Typs und Kettenglieder (16) eines zweiten Typs umfasst, wobei jedes Kettenglied (15) des ersten Typs Rückhaltevorrichtungen aufweist, die in Richtung der entsprechenden Schiene (13) überstehen, und die Rückhaltevorrichtungen (46) angeordnet sind, um durch den Führungsabschnitt (22) zurückgehalten zu werden, um auf das entsprechende Kettenglied (15) in der ersten Zone (19) eine Rückhaltekraft auszuüben, und die Abweichung (31) des Führungsabschnitts (22) in der zweiten Zone angeordnet ist, um die auf das entsprechende Kettenglied (15) ausgeübte Rückhaltekraft zu verringern, um die Kette (14) zu verformen, um die Teilung derselben zu erhöhen.

2. Vorrichtung (11) nach Anspruch 1, **dadurch gekennzeichnet, dass** jedes Kettenglied (15) des ersten Typs eine allgemeine L-Form aufweist, wobei ein erster Abschnitt (42) des Kettenglieds (15) den ersten Schenkel des L bildet und ein zweiter Abschnitt (43) des Kettenglieds (15) den zweiten Schenkel des L bildet, und sich die Artikulation (17), die mit einem Greifer (12) versehen ist, im Bereich des freien Endes (44) des ersten Abschnitts (42) befindet, und die Rückhaltevorrichtungen im Bereich des freien Endes (47) des zweiten Abschnitts (43) angeordnet sind.

3. Vorrichtung nach Anspruch 2, **dadurch gekennzeichnet, dass** die Artikulation (18) ohne Greifer jedes Kettenglieds (15) des ersten Typs im Bereich des zweiten Abschnitts (43) des besagten Kettenglieds (15) in der Nähe der Überschneidung zwischen dem ersten und dem zweiten Abschnitt (42, 43) angeordnet ist.

4. Vorrichtung (11) nach einem der Ansprüche 1 bis 3, **dadurch gekennzeichnet, dass** die Rückhaltevorrichtungen jedes Kettenglieds (15) des ersten Typs zumindest eine Rolle (46) enthalten, die angeordnet ist, um entlang des entsprechenden Führungsabschnitts (22) zu laufen.

5. Vorrichtung (11) nach einem der Ansprüche 1 bis 3, **dadurch gekennzeichnet, dass** die Rückhaltevorrichtungen jedes Kettenglieds (15) des ersten Typs zumindest einen Schlitten enthalten, der angeordnet ist, um entlang des entsprechenden Führungsabschnitts (22) zu gleiten.

6. Vorrichtung (11) nach einem der Ansprüche 1 bis 5, **dadurch gekennzeichnet, dass** die Artikulation (18) ohne Greifer jedes Kettenglieds (15) des ersten Typs Auflagevorrichtungen enthält, um auf dem Führungsabschnitt (22) aufzuliegen.

7. Vorrichtung (11) nach Anspruch 6, **dadurch gekennzeichnet, dass** die Auflagevorrichtungen zumindest eine Rolle (45) enthalten.

8. Vorrichtung (11) nach einem der Ansprüche 1 bis 7, **dadurch gekennzeichnet, dass** sich jeder Führungsabschnitt (22) bis zum hinteren Ende der entsprechenden Schiene (13) erstreckt.

9. Vorrichtung (11) nach einem der Ansprüche 1 bis 8, **dadurch gekennzeichnet, dass** sich die zweite Zone im Ofen befindet.

10. Vorrichtung (11) nach einem der Ansprüche 1 bis 8, **dadurch gekennzeichnet, dass** sich die zweite Zone außerhalb des Ofens befindet und dadurch, dass die zweite Zone eine Zone zum Abkühlen der Folie ist.

11. Vorrichtung (11) nach einem der Ansprüche 1 bis 10, **dadurch gekennzeichnet, dass** jeder Greifer (12) mehrere Rollen (34, 35, 36, 37) enthält, die angeordnet sind, um eine Führung des besagten Greifers (12) in Vorschubrichtung auf der entsprechenden Schiene (13) zu ermöglichen.

## Claims

1. A device (11) for stretching a film (2) of synthetic material in the transverse direction and in the longitudinal direction, comprising:
- a furnace,
- a first and a second set of pliers (12) disposed on either side of the film and arranged to grip the film (2) at its two longitudinal edges (3),
- two rails (13) arranged to guide the pliers (12) of the two sets inside the furnace, the first and second rails (13) extending in a general orientation parallel with the longitudinal direction of the film (2), the first and the second rails (13) diverging in a first area (19) of the device (11),
- two endless chains (14) arranged to drive the pliers (12) of the two sets along the two rails (13), each chain (14) being constituted of links (15, 16) articulated on one another by means of joints (17, 18), one joint (17) out of two used for mounting the pliers (12),
each rail (13) comprising a guide portion (22) which extends, in the first area (19) of the device, substantially parallel with the direction of the rail (13) and which exhibits in a second area of the device (11) a detachment in the direction of the chain, each chain (14) alternately comprising links (15) of a first type and links (16) of a second type, each link (15) of the first type exhibiting retaining means protruding in the direction of the corresponding rail (13), the retaining means (46) being arranged to be retained by the guide portion (22) so as to apply a retaining force on the corresponding link (15) in the first area (19), the detachment (31) of the guide portion (22) being arranged in the second area so as to decrease the retaining force on the corresponding link (15) in order to deform the chain (14) to increase the pitch thereof.

2. The device (11) according to claim 1, **characterized in that** each link (15) of the first type exhibits a general L-shape, a first part (42) of the link (15) forming the first branch of the L and a second part (43) of the link (15) forming the second branch of the L, the joint (17) provided with pliers (12) being located at the free end (44) of the first part (42) and the retaining means being disposed at the free end (47) of the second part (43).

3. The device according to claim 2, **characterized in that** the joint (18) without pliers from each link (15) of the first type is disposed at the second part (43) of said link (15), in the vicinity of the intersection between the first and second parts (42, 43).

4. The device (11) according to any of claims 1 to 3, **characterized in that** the retaining means of each link (15) of the first type comprise at least one roller (46) arranged to roll along the corresponding guide portion (22).

5. The device (11) according to any of claims 1 to 3, **characterized in that** the retaining means of each link (15) of the first type comprise at least one pad arranged to slide along the corresponding guide portion (22).

6. The device (11) according to any of claims 1 to 5, **characterized in that** the joint (18) without pliers from each link (15) of the first type comprises pressing means to press on the guide portion (22).

7. The device (11) according to claim 6, **characterized in that** the pressing means comprise at least one roller (45).

8. The device (11) according to any of claims 1 to 7, **characterized in that** each guide portion (22) extends to the downstream end of the corresponding rail (13).

9. The device (11) according to any of claims 1 to 8, **characterized in that** the second area is inside the furnace.

10. The device (11) according to any of claims 1 to 8, **characterized in that** the second area is outside the furnace and **in that** the second area is an area for cooling the film.

11. The device (11) according to any of claims 1 to 10, **characterized in that** each pair of pliers (12) comprises several rollers (34, 35, 36, 37) arranged to allow translational guiding of said pliers (12) on the corresponding rail (13).
